# EUROPÄISCHE PATENTSCHRIFT

(11) **EP 3 769 983 B1**
(45) Veröffentlichungstag und Bekanntmachung des Hinweises auf die Patenterteilung: **29.03.2023**
(21) Anmeldenummer: 20169541.8
(22) Anmeldetag: 15.04.2020
(51) Int. Cl.: B60G 99/00, B62D 33/06, F16F 1/00

(54) **ARBEITSMASCHINE**
WORK VEHICLE
VÉHICULE DE TRAVAIL

(30) Priorität: 24.07.2019 DE 102019120011
(43) Veröffentlichungstag der Anmeldung: 27.01.2021
(73) Patentinhaber: CLAAS Tractor S.A.S., 78141 Vélizy-Villacoublay Cedex (FR)
(72) Erfinder: Le Bot, Emeric, 78000 Versailles (FR)
(74) Vertreter: CLAAS Gruppe

(56) Entgegenhaltungen:
- EP-A1- 2 803 514
- DE-A1-102005 030 746
- DE-A1-102009 026 503
- FR-A- 372 726
- US-B1- 6 619 533

## Beschreibung

Die vorliegende Erfindung betrifft eine Arbeitsmaschine gemäß dem Oberbegriff des Anspruches 1.

Aus der DE 10 2005 030 746 A1 ist eine Kabinenlagerung zur federnden Aufhängung einer Kabine für einen Lastkraftwagen bekannt. Die Kabinenlagerung umfasst ein Dämpfungssystem und eine Führungsvorrichtung zur Führung der Bewegung der Fahrerkabine. Hierzu weist das Dämpfungssystem vier Feder-Dämpfer-Elemente auf, die in den äußeren Randbereichen der Kabine angeordnet sind und diese mit dem Chassis des Lastkraftwagens verbinden. Die Führungsvorrichtung umfasst zwei im vorderen Bereich der Kabine angeordnete Längslenker, die sich in Längsrichtung der Kabine erstrecken, sowie einen Scherenpantographen, der am hinteren Ende der Kabine angeordnet ist und quer zu den Längslenker orientiert ist. Der Scherenpantograph gewährleistet eine Geradführung der Kabine in vertikaler Richtung, indem Bewegungsfreiheitsgrade der Kabine relativ zum Chassis reduziert werden. Durch den Scherenpantographen werden Wank- und Nickbewegungen ebenso unterdrückt, wie senkrecht zur Richtung der Geradführung der Kabine verlaufende Bewegungen. Nachteilig ist hierbei, dass Bewegungen der Kabine relativ zum Chassis unterbunden werden, die in begrenztem Maße erwünscht sind, um diese durch das Dämpfungssystem zumindest anteilig dämpfen zu können und nicht vollständig auf einen Fahrer zu übertragen, wie dies im Stand der Technik der Fall ist.

Aus der DE 10 2009 026 503 A1, EP 2 803 514 A1 und der FR 372,726 A sind weitere Kabinenlagerungen bekannt.

Die DE 10 2009 026 503 A1 und die EP 2 803 514 A1 offenbaren beispielsweise Aufhängungseinrichtungen, die der Aufhängung eines Massekörpers, einer Kabine, relativ zu einem Unterbau, einem Chassis, dienen. Die Aufhängungseinrichtungen umfassen eine Feder-/Dämpfer-Anordnung sowie eine Wattgestängeanordnung.

Aus der FR 372, 726 A ist eine Arbeitsmaschine mit den Merkmalen des Oberbegriffs des Patentanspruchs 1 bekannt, wobei eine Lagerung einer Fahrzeugkarosserie an einem Fahrzeugchassis aufgezeigt wird.

Die Fahrzeugkarosserie ist mit Hilfe von Federn auf dem Fahrzeugchassis montiert. Unterhalb der Fahrzeugkarosserie und des Fahrzeugchassis, mittig, ist mindestens ein Gelenk angeordnet. Jedes Gelenk besteht aus zwei Armen, die durch ein Kniegelenk miteinander verbunden sind.

Aufgabe der vorliegenden Erfindung ist es, eine Kabinenlagerung einer Kabine für eine Arbeitsmaschine derart weiterzubilden, dass diese sich durch einen erhöhten Komfort und eine Vereinfachung der Konstruktion auszeichnet.

Diese Aufgabe wird erfindungsgemäß durch eine Arbeitsmaschine gemäß den Merkmalen des Anspruches 1 gelöst. Vorteilhafte Weiterbildungen sind Gegenstand der Unteransprüche.

Gemäß dem Anspruch 1 wird eine Arbeitsmaschine, insbesondere ein Traktor, mit einem Chassis und einer an dem Chassis angeordneten Kabine vorgeschlagen, wobei die Kabine durch eine Kabinenlagerung zur federnden und dämpfenden Aufhängung der Kabine relativ zu dem Chassis an dem Chassis angeordnet ist. Die Kabinenlagerung umfasst ein Dämpfungssystem und mindestens eine Führungsvorrichtung zur Führung der Bewegung der Kabine. Erfindungsgemäß ist zur Erhöhung des Komforts sowie der Vereinfachung der Konstruktion vorgesehen, dass die Führungsvorrichtung zumindest jeweils ein chassisseitig, gelagertes, insbesondere angelenktes, Führungselement und ein kabinenseitig gelagertes, insbesondere angelenktes, Führungselement umfasst, welche jeweils durch eine Gelenkanordnung mit zumindest einem Freiheitsgrad gelenkig miteinander verbunden sind. Die erfindungsgemäß ausgeführte Führungsvorrichtung erlaubt je nach Anzahl und/oder Ausrichtung bzw. Positionierung der Führungselemente zwischen dem Chassis und der Kabine die Übertragung von bestimmten, insbesondere erwünschten, Kabinenbewegungen, wie einem, insbesondere vertikalen, Heben, einem Neigen bezüglich einer quer zur Längsrichtung der Kabine verlaufenden Neigungsachse und/oder einer Rollbewegung um eine in Längsrichtung der Kabine verlaufende Achse. Hingegen lässt sich durch die Führungsvorrichtung eine unerwünschte Gierbewegung, d.h. eine Drehbewegung um die Hochachse der Kabine, vermeiden. Die erfindungsgemäße Ausgestaltung der Kabinenlagerung führt zu einer Reduzierung der Komponentenanzahl und somit einer Kostenreduzierung. Zudem wird das Montieren der Kabinenlagerung respektive der Kabine am Chassis des Arbeitsfahrzeugs vereinfacht. Ein weiterer Vorteil besteht darin, dass das Dämpfungssystem unabhängig von der Führungsvorrichtung ist, d.h. im Wesentlichen unabhängig von der Führungsvorrichtung ausgelegt und gestaltet werden kann.

Erfindungsgemäß weist die jeweilige Gelenkanordnung einen chassisseitigen Führungslenker und einen kabinenseitigen Führungslenker auf, die gelenkig miteinander verbunden sind. Der mit dem kabinenseitigen Führungslenker gelenkig verbundene chassisseitige Führungslenker kann eine im Wesentlichen scherenförmige Bewegung ausführen.

Erfindungsgemäß ist der chassisseitige Führungslenker mit dem chassisseitig gelagerten Führungselement drehfest verbunden. Weiterhin ist erfindungsgemäß vorgesehen, dass der kabinenseitige Führungslenker mit dem kabinenseitig gelagerten Führungselement drehfest verbunden ist.

Gemäß einer bevorzugten Weiterbildung können der chassisseitige Führungslenker und der kabinenseitige Führungslenker durch ein Kugelgelenk gelenkig miteinander verbunden sein. Ein Kugelgelenk ermöglicht eine mehrachsige Bewegung der miteinander durch das Kugelgelenk verbundenen Führungslenker um einen gemeinsamen Drehpunkt. Hierdurch wird eine Verbesserung der Kinematik gegenüber dem aus dem Stand der Technik bekannten Scherenpantographen erreicht. Insbesondere bei seitlich angeordneten Führungselementen, d.h. bei Führungselementen, die um in Längsrichtung der Arbeitsmaschine orientierte Schwenkachse schwenkbar sind, sollte die Lagerung des kabinenseitigen Führungslenkers zusätzlich eine Rotation um eine Längsachse und/oder das Kugelgelenk ermöglichen. Hierdurch können bei den seitlich angeordneten Führungselementen insbesondere Nickbewegungen der Kabine geführt werden.

Weiterhin kann das jeweilige Führungselement um eine im Wesentlichen quer zu dem Führungselement verlaufende Schwenkachse schwenkbar angelenkt sein.

Dadurch lässt sich eine translatorische Bewegung der chassisseitigen Führungslenker und der kabinenseitigen Führungslenker zueinander erreichen.

Insbesondere können das chassisseitige und das kabinenseitige Führungselement jeweils mit einer Lagerbuchse um die jeweilige Schwenkachse schwenkbar angelenkt sein.

Erfindungsgemäß sind dem chassisseitigen und dem kabinenseitigen Führungselement zumindest zwei koaxial zur Schwenkachse angeordnete Federelemente zugeordnet, wobei jeweils ein Federelement vor und ein Federelement hinter dem jeweiligen Führungselement positioniert ist. Die Federelemente können eine der Kabinenbewegung entgegengesetzte Kraft erzeugen. Dies hat den Vorteil, dass das Dämpfungssystem der Kabinenlagerung für geringere Lasten bzw. Kräfte ausgelegt und somit vereinfacht werden kann. Beispielsweise können die Federelemente als Schraubenfedern oder Tellerfedern ausgeführt sein. Insbesondere können die Federelemente in die Führungselemente umgebenden Gehäusen angeordnet sein. Hierdurch kann eine raumsparende Anordnung der Federelemente erreicht werden. Zudem sind die Federelemente vor äußeren Einflüssen geschützt.

Hierzu können die Führungselemente ein zylindrisches Gehäuse aufweisen. An den Gehäusen können der jeweilige chassisseitige Führungslenker bzw. der kabinenseitige Führungslenker angeordnet sein.

Bevorzugt können zumindest ein chassisseitig gelagertes Führungselement und ein kabinenseitig gelagertes Führungselement um eine in Längsrichtung der Arbeitsmaschine orientierte Schwenkachse und zumindest ein chassisseitig gelagertes Führungselement und ein kabinenseitig gelagertes Führungselement um eine quer zur Längsrichtung der Arbeitsmaschine orientierte Schwenkachse angeordnet sein. Besonders vorteilhaft ist eine symmetrische Anordnung der Führungselemente, die eine in Längsrichtung der Arbeitsmaschine orientierte Schwenkachse aufweisen. So kann die Kabinenlagerung als eine genau drei Lagerstellen aufweisende Dreipunkt-Lagerung ausgeführt sein, wobei jede Lagerstelle eine Führungsvorrichtung mit jeweils zwei Gelenkverbindungen und einem Kugelgelenk umfasst, um die jeweiligen chassisseitigen und kabinenseitigen Führungselemente und die die Führungselemente verbindenden Führungslenker zu lagern bzw. anzulenken. Insbesondere lässt sich gegenüber der aus der DE 10 2005 030 746 A1 bekannten Kabinenlagerung eine Reduzierung der Anbindungspunkte erreichen, wodurch weniger Vibrationen und akustische Schwingungen auf die Kabine übertragen werden. Weiterhin lässt hierdurch sich eine Volumenreduzierung, d.h. Bauraumreduzierung, der Kabinenlagerung erreichen, was die Integration in die Architektur der Arbeitsmaschine vereinfacht. Denkbar ist auch, dass die Kabinenlagerung genau vier Lagerstellen aufweist, wobei jede Lagerstelle eine erfindungsgemäße Führungsvorrichtung umfasst.

Gemäß einer bevorzugten Weiterbildung kann ein Überrollschutzsystem in die Führungsvorrichtung integrierbar sein, welches von dem Dämpfungssystem unabhängig ist. Hierzu kann das Überrollschutzsystem eine kabinenseitig angeordnete Verbindungsvorrichtung aufweisen, wobei die Verbindungsvorrichtung in einem ersten Betriebszustand, in welchem die Kabine betriebsbedingten Belastungen ausgesetzt ist, die durch das Dämpfungssystem kompensierbar sind, spielbehaftet und insbesondere formschlüssig in eine chassisseitige Haltevorrichtung eingreift, wobei das Überrollschutzsystem parallel und separat zu dem Dämpfungssystem angeordnet ist, und in einem zweiten Betriebszustand, in welchem es zu einer Aktivierung des Überrollschutzsystems kommt, die auftretenden Belastungen unmittelbar über die Verbindungsvorrichtung abgeleitet werden.

Die vorliegende Erfindung wird nachstehend anhand eines in den Zeichnungen dargestellten Ausführungsbeispieles näher erläutert.

Es zeigen:
- Fig. 1: eine schematische Darstellung einer Kabinenlagerung einer Kabine einer Arbeitsmaschine in einer unbelasteten Ausgangsposition;
- Fig. 2: eine schematische Darstellung der Kabinenlagerung gemäß Fig. 1 in einer durch eine vertikale Bewegung der Kabine veränderten Position;
- Fig. 3: eine schematische Darstellung der Kabinenlagerung gemäß Fig. 1 in einer durch eine Nickbewegung der Kabine geneigten Position; und
- Fig. 4: eine schematische Darstellung der Kabinenlagerung gemäß Fig. 1 in einer durch eine Rollbewegung der Kabine um eine Längsachse der Kabine verschwenkten Position.

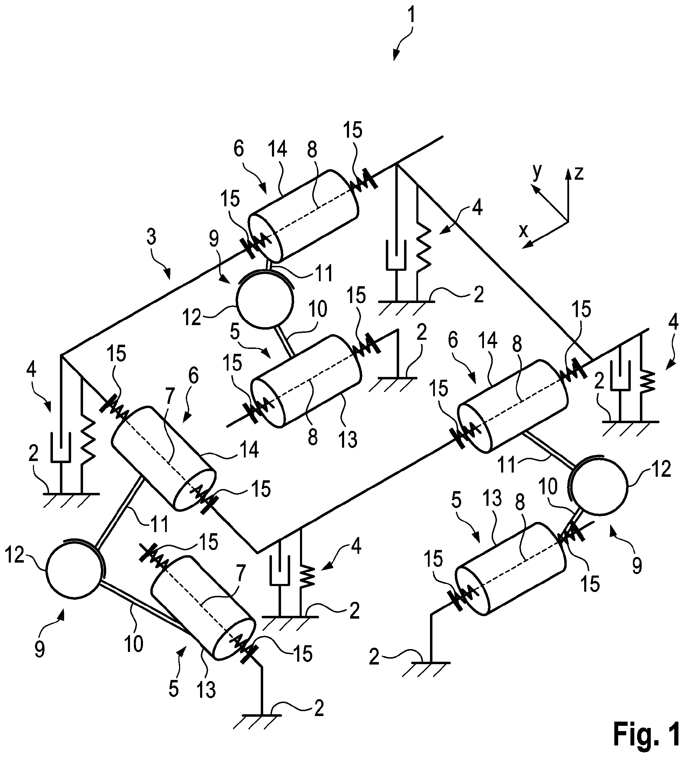

Die Darstellung Fig. 1. zeigt eine schematische Darstellung einer Kabinenlagerung 1 einer Kabine 3 einer - nicht dargestellten - Arbeitsmaschine in einer unbelasteten Ausgangsposition. Die Arbeitsmaschine kann insbesondere als ein Traktor ausgeführt sein. In der unbelasteten Ausgangssituation wirken keine Lasten und/oder Kräfte auf die Kabinenlagerung 1 respektive die Kabine 3 ein, die zu einer Bewegung der Kabine 3 in zumindest einer Richtung der drei Hauptachsen x, y, z führen können. Die Hauptachse x weist dabei in Längsrichtung der Kabine 3. Die Hauptachse y weist in Querrichtung der Kabine 3. Die Hauptachse z weist in Hochrichtung der Kabine 3. Die Kabinenlagerung 1 dient der federnden und dämpfenden Aufhängung der Kabine 3 der Arbeitsmaschine relativ zu einem Chassis 2 der Arbeitsmaschine. Die Kabinenlagerung 1 umfasst ein Dämpfungssystem und eine Führungsvorrichtung zur Führung der Bewegung der Kabine 3. Das Dämpfungssystem kann mehrere Feder-Dämpferelemente 4 umfassen, die sich im Wesentlichen in vertikaler Richtung zwischen dem Chassis 2 und der Unterseite der Kabine 3 erstrecken und diese miteinander verbinden.

Die Führungsvorrichtung umfasst zumindest ein chassisseitig, gelagertes, insbesondere angelenktes, Führungselement 5 und ein kabinenseitig gelagertes, insbesondere angelenktes, Führungselement 6. Ein chassisseitiges Führungselement 5 und ein kabinenseitiges Führungselement 6 sind um jeweils eine parallel zur Hauptachse y verlaufende Schwenkachse 7 schwenkbar angelenkt. Zwei chassisseitige Führungselemente 5 und zwei kabinenseitige Führungselemente 6 sind um jeweils eine parallel zur Hauptachse x verlaufende Schwenkachse 8 schwenkbar angelenkt. Das chassisseitige Führungselement 5 und das kabinenseitige Führungselement 6 können jeweils mittels einer Lagerbuchse an dem Chassis 2 bzw. der Kabine 3 angelenkt sein. Die jeweilige Paarung der chassisseitigen Führungselemente 5 und der kabinenseitigen Führungselemente 6 ist durch jeweils eine Gelenkanordnung 9 mit zumindest einem Freiheitsgrad gelenkig miteinander verbunden.

Die jeweilige Gelenkanordnung 9 weist einen chassisseitigen Führungslenker 10 und einen kabinenseitigen Führungslenker 11 auf, die gelenkig miteinander verbunden sind. Der chassisseitige Führungslenker 10 ist mit dem chassisseitig gelagerten Führungselement 5 drehfest verbunden. Der kabinenseitige Führungslenker 11 ist mit dem kabinenseitig gelagerten Führungselement 6 drehfest verbunden. Die Führungselemente 5, 6 können jeweils ein zylindrisches Gehäuse 13 bzw. 14 aufweisen. Mit dem jeweiligen Gehäuse 13 bzw. 14 können der chassisseitige Führungslenker 10 bzw. der kabinenseitige Führungslenker 11 der jeweils drehfest verbunden sein. Dem chassisseitigen Führungselement 5 und/oder dem kabinenseitigen Führungselement 6 sind zumindest zwei koaxial zur Schwenkachse 7, 8 angeordnete Federelemente 15 zugeordnet, wobei jeweils ein Federelement 15 vor und eines hinter dem jeweiligen Führungselement 5, 6 positioniert ist. Insbesondere können die Federelemente 15 in den Gehäuse 13 bzw. 14 der chassisseitigen Führungslenker 10 bzw. der kabinenseitigen Führungslenker 11 angeordnet sein. Hierzu können die Federelemente 15 als Schraubenfedern oder Tellerfedern ausgeführt sein, die eine der Bewegung der Kabine 3 entgegengerichtete Kraft erzeugen.

Zur gelenkigen Verbindung des chassisseitigen Führungslenkers 10 und des kabinenseitigen Führungslenkers 11 ist jeweils ein Kugelgelenk 12 vorgesehen. Das Kugelgelenk 12 weist mindestens zwei Freiheitsgrade auf, die eine Kipp- bzw. Rotationbewegung der chassisseitigen Führungslenker 10 und der mit diesen gelenkig verbundenen kabinenseitigen Führungslenker 11 erlauben. In Verbindung mit der Anlenkung der Führungselemente 5, 6 können die durch das Kugelgelenk 12 verbundenen Führungslenker 10 und 11 eine scherenförmige Bewegung ausführen. Denkbar ist aber auch die Anordnung eines Gelenks zur gelenkigen Verbindung des chassisseitigen Führungslenkers 10 und des kabinenseitigen Führungslenkers 11 mit genau einem Freiheitsgrad.

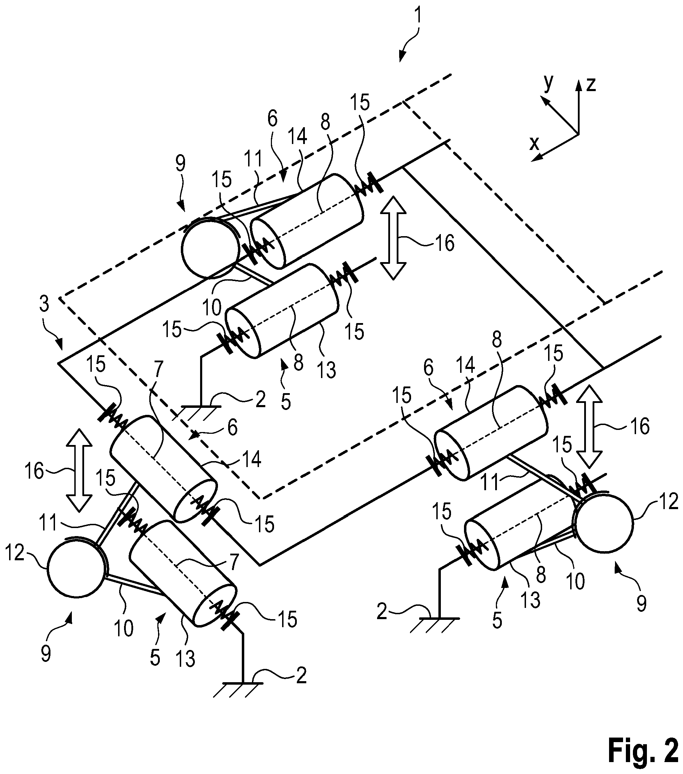

In Fig. 2 ist eine schematische Darstellung der Kabinenlagerung 1 gemäß Fig. 1 in einer durch eine vertikale Bewegung 16 der Kabine 3 veränderten Position dargestellt. Zur besseren Veranschaulichung der Kinematik ist die Ausgangsposition der Kabine 3 in dieser und den nachfolgenden Figuren strichliniert dargestellt. Auf die Darstellung der Feder-Dämpferelemente 4 wurde aus Gründen der Übersichtlichkeit verzichtet. Die vertikale Bewegung 16 der Kabine 3 bewirkt, dass, ausgehend von der Ausgangsposition der Kabine 3, sich der Winkel, den die Führungslenker 10 und Führungslenker 11 zwischen sich einschließen, verändert. Senkt sich die Kabine 3 in vertikaler Richtung durch die Bewegung 16 gegenüber der Ausgangsposition ab, so wird der Winkel kleiner. Hebt sich die Kabine 3 in vertikaler Richtung gegenüber der Ausgangsposition durch die Bewegung 16 an, so wird der Winkel größer.

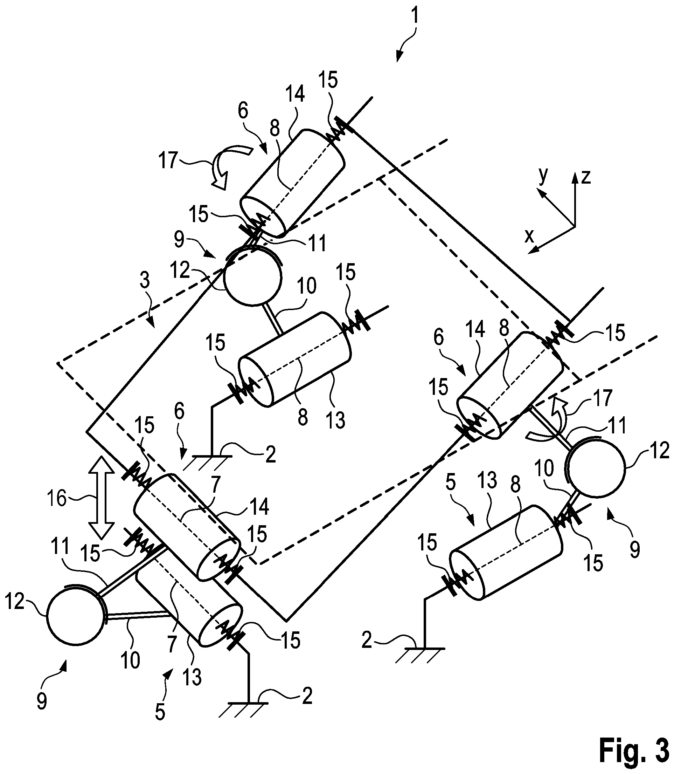

In Fig. 3 ist eine schematische Darstellung der Kabinenlagerung 1 gemäß Fig. 1 in einer durch eine Nickbewegung 17 der Kabine 3 geneigten Position dargestellt. Die Nickbewegung 17 der Kabine 3 bewirkt, dass die an den parallel zur Hauptachse y verlaufenden Schwenkachsen 7 durch die Führungslenker 10, 11 angelenkten Führungselemente 5, 6 eine scherenförmige Bewegung ausführen, in welcher sie sich aufeinander zu bewegen. Hingegen führen die an den parallel zur Hauptachse x verlaufenden Schwenkachsen 8 durch die Führungslenker 10, 11 angelenkten, seitlich angeordneten, Führungselemente 5, 6 eine scherenförmige Bewegung ausführen, in welcher sie sich voneinander entfernen. Durch die seitlich angeordneten Führungselemente 5, 6 wird die Kabine 3 bei Nickbewegungen geführt.

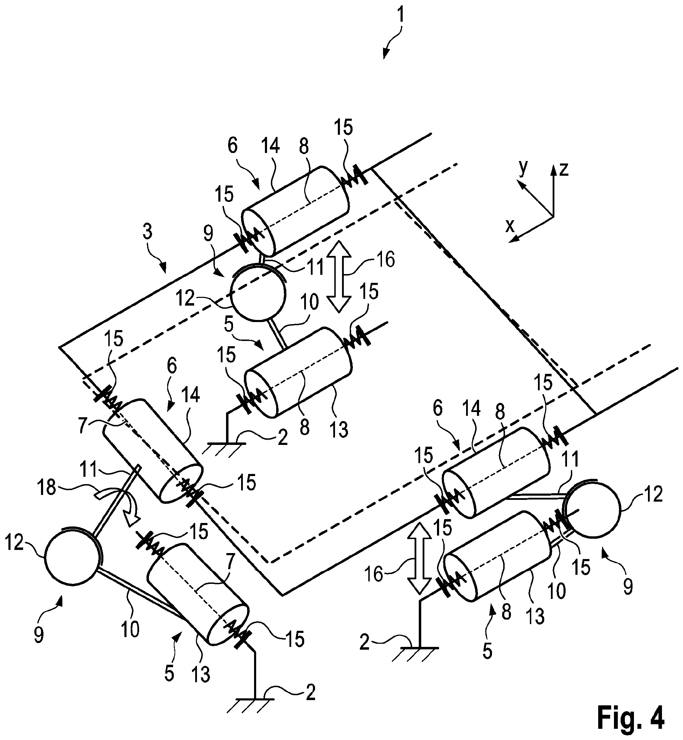

Fig. 4 zeigt eine schematische Darstellung der Kabinenlagerung 1 gemäß Fig. 1 in einer durch eine Rollbewegung 18 der Kabine 3 um die zur Hauptachse x parallel verlaufende Längsachse der Kabine 3 verschwenkten Position. Die Rollbewegung 18 der Kabine 3 bewirkt, dass die an den parallel zur Hauptachse x verlaufenden Schwenkachsen 8 durch die Führungslenker 10, 11 angelenkten Führungselemente 5, 6 eine scherenförmige Bewegung ausführen, in welcher sie sich auf einer Seite durch die geführte vertikale Bewegung 16 aufeinander zu bewegen und auf der anderen Seite voneinander entfernen. Die an den parallel zur Hauptachse y verlaufenden Schwenkachsen 7 durch die Führungslenker 10, 11 angelenkten Führungselemente 5, 6 führen mittels des Kugelgelenks 12 eine Drehbewegung um die Hauptachse x aus.

Die anhand der Fig. 2 bis 4 beschriebenen Bewegungen der Kabine 3, das Heben, das Neigen sowie das Rollen, lassen sich durch die Führungsvorrichtung auch in Kombination miteinander auf die Kabine 3 übertragen. Unerwünschte Gierbewegungen der Kabine 3 werden durch die Führungsvorrichtung vermieden.

Die Führungsvorrichtung weist mindestens eine, bevorzugt genau drei oder genau vier, Lagerstellen mit jeweils einer Führungsvorrichtung auf, wobei jede Lagerstelle jeweils zwei Gelenkverbindungen zur Anlenkung jeweils eines chassisseitigen Führungselementes 5 und eines kabinenseitigen Führungselementes 6 sowie die als Kugelgelenk 12 ausgeführte Gelenkanordnung 9 zur gelenkigen Verbindung des jeweiligen chassisseitigen Führungslenkers 10 und des jeweiligen kabinenseitigen Führungslenkers 11 umfassen. Durch die Ausführung der Kabinenlagerung 1 mit genau drei Lagerstellen oder genau vier Lagerstellen wird eine konstruktive Vereinfachung erreicht. So wird das Bauraumvolumen der Kabinenlagerung 1 reduziert, wodurch die Integration in die Architektur der Arbeitsmaschine vereinfacht wird. Durch die reduzierte Anzahl an Lagerstellen ist die Anzahl an Einleitungspunkten für Vibrationen sowie akustische Schwingungen in die Kabine 3 reduziert.

Des Weiteren kann die Gelenkanordnung 9 der Führungsvorrichtung, die parallel zur Hauptachse y angeordnet ist, gegenüber den Gelenkanordnungen 9 der Führungsvorrichtungen, die parallel zur Hauptachse x angeordnet sind, eine abweichende Anzahl an Freiheitgraden aufweisen.

### Bezugszeichenliste

- 1: Kabinenlagerung
- 2: Chassis
- 3: Kabine
- 4: Feder-Dämpfer-Element
- 5: Chassisseitiges Führungselement
- 6: Kabinenseitiges Führungselement
- 7: Schwenkachse
- 8: Schwenkachse
- 9: Gelenkanordnung
- 10: Chassisseitiger Führungslenker
- 11: Kabinenseitiger Führungslenker
- 12: Kugelgelenk
- 13: Gehäuse
- 14: Gehäuse
- 15: Federelement
- 16: Vertikale Bewegung
- 17: Nickbewegung
- 18: Rollbewegung

## Patentansprüche

1. Arbeitsmaschine, insbesondere Traktor, mit einem Chassis (2) und einer an dem Chassis (2) angeordneten Kabine (3), wobei die Kabine (3) durch eine Kabinenlagerung (1) zur federnden und dämpfenden Aufhängung der Kabine (3) relativ zu dem Chassis (2) an dem Chassis (2) angeordnet ist, wobei die Kabinenlagerung (1) ein Dämpfungssystem sowie eine mindestens eine Führungsvorrichtung zur Führung der Bewegung (16, 17, 18) der Kabine (3) umfasst, wobei die Führungsvorrichtung zumindest ein chassisseitig, gelagertes, insbesondere angelenktes, Führungselement (5) und ein kabinenseitig gelagertes, insbesondere angelenktes, Führungselement (6) umfasst, welche durch jeweils eine Gelenkanordnung (9) mit zumindest einem Freiheitsgrad gelenkig miteinander verbunden sind, wobei die jeweilige Gelenkanordnung (9) einen chassisseitigen Führungslenker (10) und einen kabinenseitigen Führungslenker (11) aufweist, die gelenkig miteinander verbunden sind, wobei der chassisseitige Führungslenker (10) mit dem chassisseitig gelagerten Führungselement (5) drehfest verbunden ist und wobei der kabinenseitige Führungslenker (11) mit dem kabinenseitig gelagerten Führungselement (6) drehfest verbunden ist, **dadurch gekennzeichnet, dass** dem chassisseitigen und dem kabinenseitigen Führungselement (5, 6) zumindest zwei koaxial zur Schwenkachse (7, 8) angeordnete Federelemente (15) zugeordnet sind, wobei jeweils ein Federelement (15) vor und ein Federelement (15) hinter dem jeweiligen Führungselement (5, 6) positioniert ist.

2. Arbeitsmaschine nach Anspruch 1, **dadurch gekennzeichnet, dass** der chassisseitige Führungslenker (10) und der kabinenseitige Führungslenker (11) durch ein Kugelgelenk (12) gelenkig miteinander verbunden sind.

3. Arbeitsmaschine nach einem der Ansprüche 1 oder 2, **dadurch gekennzeichnet, dass** das jeweilige Führungselement (5, 6) um eine im Wesentlichen quer zu dem Führungselement (5, 6) verlaufende Schwenkachse (7, 8) schwenkbar angelenkt ist.

4. Arbeitsmaschine nach einem der Ansprüche 1 bis 3, **dadurch gekennzeichnet, dass** das chassisseitige und das kabinenseitige Führungselement (5, 6) jeweils mit einer Lagerbuchse um die jeweilige Schwenkachse (7, 8) schwenkbar angelenkt sind.

5. Arbeitsmaschine nach einem der Ansprüche 1 bis 4, **dadurch gekennzeichnet, dass** die Führungselemente (5, 6) ein zylindrisches Gehäuse (13, 14) aufweisen.

6. Arbeitsmaschine nach einem der Ansprüche 1 bis 5, **dadurch gekennzeichnet, dass** zumindest ein weiteres chassisseitig gelagertes Führungselement (5) und ein weiteres kabinenseitig gelagertes Führungselement (6) um eine in Längsrichtung der Arbeitsmaschine orientierte Schwenkachse (8) und das chassisseitig gelagerte Führungselement (5) und das kabinenseitig gelagertes Führungselement (6) um eine quer zur Längsrichtung der Arbeitsmaschine orientierte Schwenkachse (7) angeordnet sind oder dass das chassisseitig gelagerte Führungselement (5) und das kabinenseitig gelagerte Führungselement (6) um eine in Längsrichtung der Arbeitsmaschine orientierte Schwenkachse (8) und zumindest ein weiteres chassisseitig gelagertes Führungselement (5) und ein weiteres kabinenseitig gelagertes Führungselement (6) um eine quer zur Längsrichtung der Arbeitsmaschine orientierte Schwenkachse (7) angeordnet sind oder dass zumindest ein weiteres chassisseitig gelagertes Führungselement (5) und ein weiteres kabinenseitig gelagertes Führungselement (6) um eine in Längsrichtung der Arbeitsmaschine orientierte Schwenkachse (8) und zumindest ein weiteres chassisseitig gelagertes Führungselement (5) und ein weiteres kabinenseitig gelagertes Führungselement (6) um eine quer zur Längsrichtung der Arbeitsmaschine orientierte Schwenkachse (7) angeordnet sind.

7. Arbeitsmaschine nach einem der Ansprüche 1 bis 6, **dadurch gekennzeichnet, dass** ein Überrollschutzsystem in die Führungsvorrichtung integrierbar ist, welches von dem Dämpfungssystem unabhängig ist.

## Claims

1. A working machine, in particular a tractor, with a chassis (2) and a cabin (3) disposed on the chassis (2), wherein the cabin (3) is disposed on the chassis (2) by means of a cabin mounting (1) for resilient and damping suspension of the cabin (3) relative to the chassis (2), wherein the cabin mounting (1) comprises a damping system as well as at least one guide device for guiding the movement (16, 17, 18) of the cabin, wherein the guide device comprises at least one guide element (5) which is mounted, in particular articulated, on the chassis side, and a guide element (6) which is mounted, in particular articulated, on the cabin side which are articulated to each other by means of a respective articulation assembly (9) with at least one degree of freedom, wherein the respective articulation assembly (9) has a guide rod (10) on the chassis side and a guide rod (11) on the cabin side which are articulated to each other, wherein the guide rod (10) on the chassis side is connected to the guide element (5) mounted on the chassis side in a manner that is fixed against rotation and wherein the guide rod (11) on the cabin side is connected to the guide element (6) mounted on the cabin side in a manner that is fixed against rotation, **characterized in that** at least two spring elements (15) which are coaxial with the pivot axis (7, 8) are associated with the guide elements (5, 6) on the chassis side and on the cabin side, wherein in each case, a spring element (15) is positioned in front of and a spring element (15) is positioned behind the respective guide element (5, 6).

2. The working machine according to claim 1, **characterized in that** the guide rod (10) on the chassis side and the guide rod (11) on the cabin side are articulated to each other by means of a ball joint (12).

3. The working machine according to claim 1 or claim 2, **characterized in that** the respective guide element (5, 6) is pivotally articulated about a pivot axis (7, 8) which extends substantially transversely to the guide element (5, 6).

4. The working machine according to one of claims 1 to 3, **characterized in that** the guide elements (5, 6) on the chassis side and on the cabin side are respectively pivotally articulated about the respective pivot axis (7, 8) with a bearing bushing.

5. The working machine according to one of claims 1 to 4, **characterized in that** the guide elements (5, 6) have a cylindrical housing (13, 14).

6. The working machine according to one of claims 1 to 5, **characterized in that** at least one further guide element (5) mounted on the chassis side and a further guide element (6) mounted on the cabin side are disposed about a pivot axis (8) orientated in the longitudinal direction of the working machine and the guide element (5) mounted on the chassis side and the guide element (6) mounted on the cabin side are disposed about a pivot axis (7) orientated transversely to the longitudinal direction of the working machine, or **in that** the guide element (5) mounted on the chassis side and the guide element (6) mounted on the cabin side are disposed about a pivot axis (8) orientated in the longitudinal direction of the working machine and at least one further guide element (5) mounted on the chassis side and a further guide element (6) mounted on the cabin side are disposed about a pivot axis (7) orientated transversely to the longitudinal direction of the working machine, or **in that** at least one further guide element (5) mounted on the chassis side and a further guide element (6) mounted on the cabin side are disposed about a pivot axis (8) orientated in the longitudinal direction of the working machine and at least one further guide element (5) mounted on the chassis side and a further guide element (6) mounted on the cabin side are disposed about a pivot axis (7) orientated transversely to the longitudinal direction of the working machine.

7. The working machine according to one of claims 1 to 6,
**characterized in that** an over-roll protection system which is independent of the damping system can be integrated into the guide device.

## Revendications

1. Machine de travail, en particulier tracteur, comprenant un châssis (2) et une cabine (3) disposée sur le châssis (2), la cabine (3) étant disposée sur le châssis (2) par l'intermédiaire d'un support de cabine (1) pour une suspension élastique et amortissante de la cabine (3) par rapport au châssis (2), le support de cabine (1) incluant un système d'amortissement ainsi qu'au moins un dispositif de guidage pour guider le déplacement (16, 17, 18) de la cabine (3), le dispositif de guidage incluant au moins un élément de guidage (5) supporté, en particulier articulé, côté châssis et un élément de guidage (6) supporté, en particulier articulé, côté cabine, lesquels sont reliés entre eux de manière articulée par l'intermédiaire respectivement d'un agencement articulé (9) avec au moins un degré de liberté, l'agencement articulé respectif (9) comportant un bras de guidage côté châssis (10) et un bras de guidage côté cabine (11), lesquels sont reliés entre eux de manière articulée, le bras de guidage côté châssis (10) étant solidarisé en rotation à l'élément de guidage supporté côté châssis (5), et le bras de guidage côté cabine (11) étant solidarisé en rotation à l'élément de guidage supporté côté cabine (6), **caractérisée en ce qu'**à l'élément de guidage côté châssis et l'élément de guidage côté cabine (5, 6) sont associés au moins deux éléments élastiques (15) disposés coaxialement à l'axe de pivotement (7, 8), respectivement un élément de ressort (15) étant positionné devant et un élément de ressort (15) étant positionné derrière l'élément de guidage respectif (5, 6).

2. Machine de travail selon la revendication 1, **caractérisée en ce que** le bras de guidage côté châssis (10) et le bras de guidage côté cabine (11) sont reliés entre eux de manière articulée par l'intermédiaire d'une articulation à rotule (12) .

3. Machine de travail selon une des revendications 1 ou 2, **caractérisée en ce que** l'élément de guidage respectif (5, 6) est articulé de manière pivotante autour d'un axe de pivotement (7, 8) s'étendant sensiblement transversalement à l'élément de guidage (5, 6).

4. Machine de travail selon une des revendications 1 à 3, **caractérisée en ce que** l'élément de guidage côté châssis et l'élément de guidage côté cabine (5, 6) sont respectivement articulés de manière pivotante autour de l'axe de pivotement (7, 8) avec un coussinet.

5. Machine de travail selon une des revendications 1 à 4, **caractérisée en ce que** les éléments de guidage (5, 6) comportent un carter cylindrique (13, 14).

6. Machine de travail selon une des revendications 1 à 5, **caractérisée en ce qu'**au moins un autre élément de guidage supporté côté châssis (5) et un autre élément de guidage supporté côté cabine (6) sont disposés autour d'un axe de pivotement (8) orienté dans la direction longitudinale de la machine de travail, et l'élément de guidage supporté côté châssis (5) et l'élément de guidage supporté côté cabine (6) sont disposés autour d'un axe de pivotement (7) orienté transversalement à la direction longitudinale de la machine de travail, ou **en ce que** l'élément de guidage supporté côté châssis (5) et l'élément de guidage supporté côté cabine (6) sont disposés autour d'un axe de pivotement (8) orienté dans la direction longitudinale de la machine de travail, et au moins un autre élément de guidage supporté côté châssis (5) et un autre élément de guidage supporté côté cabine (6) sont disposés autour d'un axe de pivotement (7) orienté transversalement à la direction longitudinale de la machine de travail, ou **en ce qu'**au moins un autre élément de guidage supporté côté châssis (5) et un autre élément de guidage supporté côté cabine (6) sont disposés autour d'un axe de pivotement (8) orienté dans la direction longitudinale de la machine de travail et au moins un autre élément de guidage supporté côté châssis (5) et un autre élément de guidage supporté côté cabine (6) sont disposés autour d'un axe de pivotement (7) orienté transversalement à la direction longitudinale de la machine de travail.

7. Machine de travail selon une des revendications 1 à 6, **caractérisée en ce que** dans le dispositif de guidage peut être intégré un système anti-capotage qui est indépendant du système d'amortissement.
